# EUROPEAN PATENT SPECIFICATION

(11) **EP 0 425 281 B1**
(45) Date of publication and mention of the grant of the patent: **21.06.1995**
(21) Application number: 90311682.0
(22) Date of filing: 24.10.1990
(51) Int. Cl.: E04B 2/74, E04B 1/61

(54) **Interior walls with easily cleanable surfaces**
Innenwände mit leicht zu reinigenden Oberflächen
Murs intérieurs à surfaces facilement nettoyables

(30) Priority: 27.10.1989 GB 8924228
(43) Date of publication of application: 02.05.1991
(73) Proprietor: STARTVITAL LIMITED, Porlethen, Aberdeen AB1 4RF, Scotland (GB)
(72) Inventor: Notley, Julian Christopher Melfort, Huntingdon, Cambridgeshire, PE18 0QR (GB)
(74) Representative: Sorrell, Terence Gordon

(56) References cited:
- DE-A- 2 335 980
- DE-B- 1 658 951
- FR-A- 1 028 792
- FR-A- 1 247 352
- FR-A- 1 426 332
- FR-A- 2 132 526
- FR-A- 2 461 069
- FR-A- 2 461 069
- GB-A- 2 085 995
- US-A- 3 570 199
- US-A- 3 924 369

## Description

The present invention relates to the construction of interior walls having easily cleanable surfaces and, in particular, the invention relates to interior walls of the type constructed from panels and panel connection assemblies.

Interior walls with easily cleanable surfaces are often used in buildings where clean conditions are essential, for example, in buildings used for the preparation of food or medical equipment. The surface of the interior walls is smooth and flush, so that it may be easily cleaned down with a disinfectant solution and walls typically consist of an arrangement of panels comprising plastic coated thin metal plates positioned on either side of an insulating material. In a known arrangement, the panels are held together by panel connection assemblies, in which the outer metal layers of each panel form a sandwich with a layer of expanded polystyrene, creating a rigid panel with good thermal insulating properties. To facilitate assembly of these panels, the side edge of each panel includes a substantially central groove into which a rigid tongue is placed, thereby holding adjacent panels firmly together. A small gap is left between adjoining panels, which is filled with a suitable filler (usually silicone based) to provide a smooth flush wall.

In the known panels, the outer metal plates are glued to the polystyrene central portion, thereby allowing a structure to be erected using conventional techniques. The resulting structure satisfies the requirements of providing easily cleanable surfaces, while allowing the interior working space to be maintained substantially below normal room temperature. Over recent years, interior structures of this type have become larger, as manufacturers have required larger working spaces, so that all stages of a manufacturing process may be enclosed within a common environment. Very large structures of this type may be constructed which remain perfectly stable during normal operating conditions. However, such large structures can become very dangerous in the event of a fire, in which a small fire may cause damage to part of the structure which in turn may cause weakness leading to total catastrophic collapse of the whole structure, or at least a substantial part of it. It is therefore an object of the present invention to provide an improved apparatus for constructing interior walls with easily cleanable surfaces. In particular, it is an object of the present invention to provide a structure which is resilient to the outbreak of fire.

A panel joint is shown in United Kingdom patent No. 2 085 995, in which two panels are joined by a pair of channel sections having flanges overlaying the marginal portions of the panels and held together by screws and nuts. This form of assembly provides a much more stable structure, however the overlaying flanges result in a surface which is no-longer flush with that of the panel surfaces. In addition, when subjected to heat from a localised fire, the outer metal surface plates expand, resulting in deformation which may still lead to collapse.

Another panel joint is shown in French patent specification No. FR-2 461 069, in which two panels are joined by a connection assembly comprising a pair of channelled sections, each of which consists of two opposing "Z"-shaped portions having anchorage portions to engage outwardly depending ends of surface sheets of adjacent panels, held together by a prismatic element and screws.

This form of assembly also provides a more stable structure but the connection assembly, whilst not extending beyond the outer surfaces of the adjacent panels, is such that it results in surfaces which are not flush with those of the panels.

French patent specification No. FR-2 132 526 shows an apparatus for constructing interior walls with easily cleanable surfaces, comprising wall panels and panel connection assemblies, wherein the panels are fabricated from heat resistant material sandwiched between surface sheets, and the panels have, on side surfaces of oppositely facing longitudinal edges thereof, recesses; and the panel connection assemblies each comprise two elongate members, which are generally "U"-shaped in transverse cross-section, and which each have a "U"-shaped portion and outwardly extending flange portions; means are provided for securing the elongate members together within a space between generally opposing longitudinal edges of adjacent panels with the flange portions of respective elongate members being substantially accommodated within corresponding recesses in said adjacent panels, and cover plates accomodated within the recesses to form smooth and easily cleanable surfaces.

This form of assembly also provides a more stable structure. However, since the elongate members of the connection assemblies are secured to upright members which are fixed between surface sheets of the panels, loads exerted on a wall formed from the panels and connection assemblies can cause separation of the surface sheets from the uprights possibly leading to collapsure of the wall thus formed.

The present invention is characterised in that the surface sheets are metal plates and said plates extend throughout the width of the recesses such that ends of the plates contact the walls of the "U"-shaped portions of respective elongate members so that the ends of said metal plates, under the influence of heat, apply force to the "U"-shaped portions, thereby maintaining the rigidity of the structure.

In accordance with the invention, the recesses in the panels accommodate the flanges, thereby providing a smooth cleanable surface once the cover plates have been located into position. Furthermore, by extending over the full width of a respective panel and positioned so as to be in contact with the side section of an elongate member, the surface metal plates are arranged such that, under the influence of localised heat, they expand so as to exert a force on the side sections of said elongate members, providing the advantage of improved stability under the influence of localised heat. Thus, it is common for the glue between the insulating material and the outer metal plate of a panel to melt under the influence of heat, which may also occur in apparatus constructed in accordance with the present invention. However, under such conditions, the metal outer surface plates exert force against the side sections of the elongate members, thereby ensuring that the structure remains erect for a considerable period of time, thereby facilitating the evacuation of personnel and protecting valuable machinery within the enclosure.

The invention will now be described with reference to the accompanying drawings, in which:
Figure 1 shows an arrangement of panels forming a structure;
Figure 2 shows a cross section through two panels fastened together by a connection assembly, according to the present invention;
Figure 3 shows an assembly for connecting panels at a corner;
Figure 4 shows an assembly for providing a partition within the enclosure;
Figure 5 shows an assembly for connecting panels to form a ceiling, including a ceiling bracket;
Figure 6 details the ceiling bracket identified in Figure 5; and,
Figure 7 shows a bracket for fastening a panel to the floor.

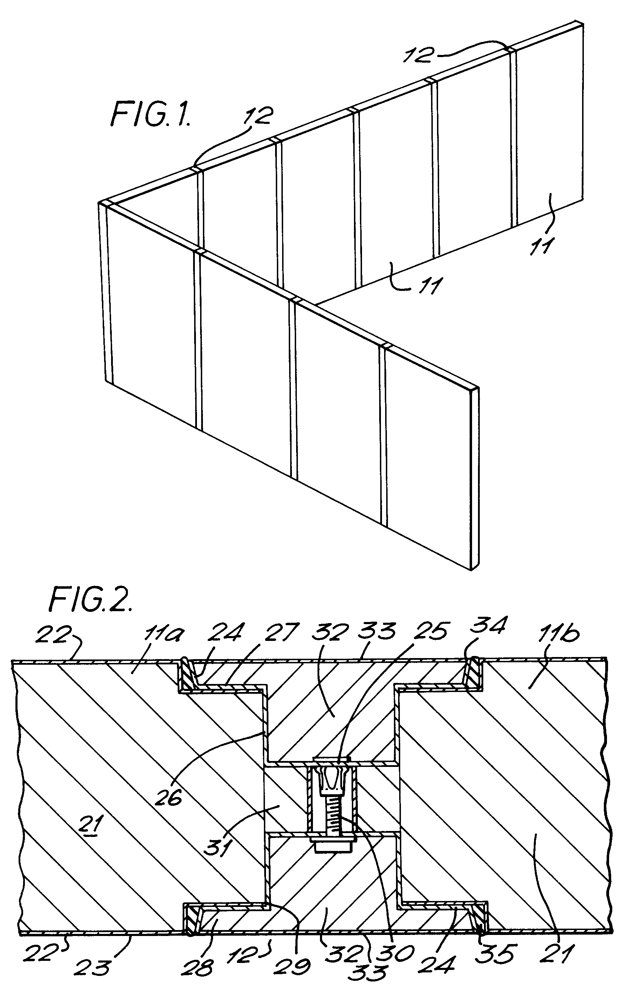

An arrangement of fire resistant panels 11 with easily cleanable interior surfaces is shown in Figure 1, in which adjacent panels are held together by panel connection assemblies 12. The panels are used to create a totally enclosed room within a building, such as a large warehouse, in which clean conditions may be maintained for processes, such as the preparation of food. A typical working area may be 100 metres long by 20 metres wide with a ceiling height of 8 metres and the panels are insulated so that the enclosure formed may be maintained at a temperature significantly below normal room temperature. Each panel is typically about 1 metre in width, to facilitate assembly of an interior space within a short period of time using a minimum number of construction workers.

A cross section through a panel connection assembly 12 and the ends of two panels 11a and 11b, is shown in Figure 2. Each panel 11 is fabricated from a fire resistant material 21, such as "rocklam 17" (rocklam 17 is a trade name) supported between surface metal plates 22, which in turn are coated with an easily cleanable plastic outer skin 23. As an alternative to rocklam 17, the fire resistant material 21 may consist of a sandwich of rockwool (spiralite) forming a sandwich with a layer of expanded polystyrene. However, in the preferred embodiment, a single material is preferred, so that layer separation does not occur under the influence of fire.

Each connection assembly 12 includes a pair of elongate members 24 of substantially U-shape cross section with holes 25 positioned at the bottom of said U-shape. When constructing a vertical wall, the elongate members are positioned vertically, and their U-shape portions are arranged to enter a gap between adjacent panels, with flange portions 27 extending over the edges of said panels 11. Each panel 11 includes a recess 28, arranged to receive a respective flange portion, thereby ensuring that the assembly 12 is flush with the surfaces of the wall. Furthermore, the surface metal plates 22 extend throughout the length of said recesses, so that the ends of said metal plates 29 are placed in contact with walls of U-shaped portions such that, under the influence of heat, the surface metal plates expand and apply force to the U-shaped portions 26, thereby maintaining the rigidity of the structure.

During the assembly process, the U-shaped portions 26 are connected together by means of bolts 30 applied through holes 25, wherein said bolts provide the only thermal path between an interior surface of the panels and the exterior surface. The space between the U-shaped portions is filled with an insulating material 31, such as rockwall and the interior space of said U-shaped portions is also filled with a similar insulating material 32. To complete the assembly, cover plates 33 engage with the ends 34 of the elongate members 24 and any gap between the elongate members 24 and the panels 11 is filled in with a suitable silicon based filler, thereby providing a flush surface along both panels and connection assemblies.

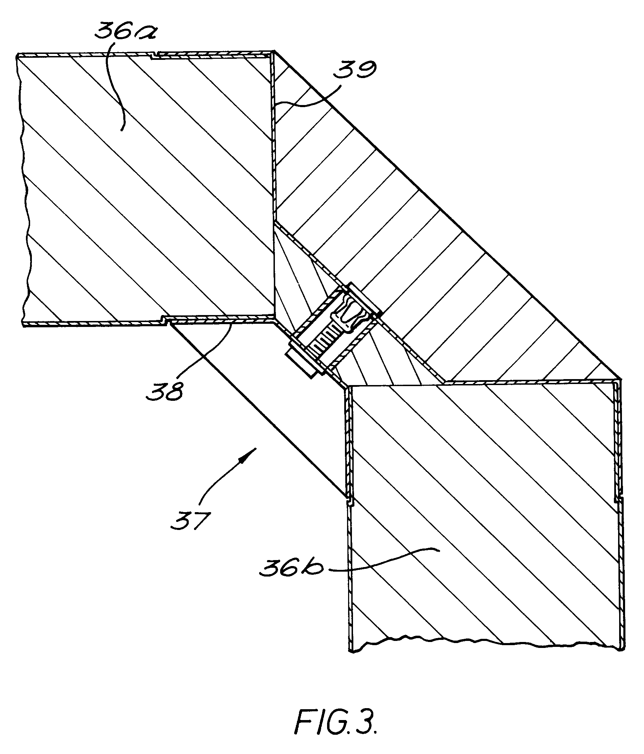

The assembly 12 shown in Figure 2 provides rigidity in the event of a fire because as surface metal plates 22 expand, they are forced into contact with the side surfaces of the U-shaped portions 26. As previously stated, the panels must form a completely enclosed room, not just a line of vertical walls, therefore the assemblies must be modified to allow panels to form corners and to be arranged so as to form a ceiling. Two panels 36a, 36b are shown in Figure 3, connected by a corner assembly 37, consisting of an internal elongate member 38 cooperating with an external elongate member 39. It should be noted that members 38 and 39 are firmly secured together, thereby assuring maintained rigidity in the event of a fire.

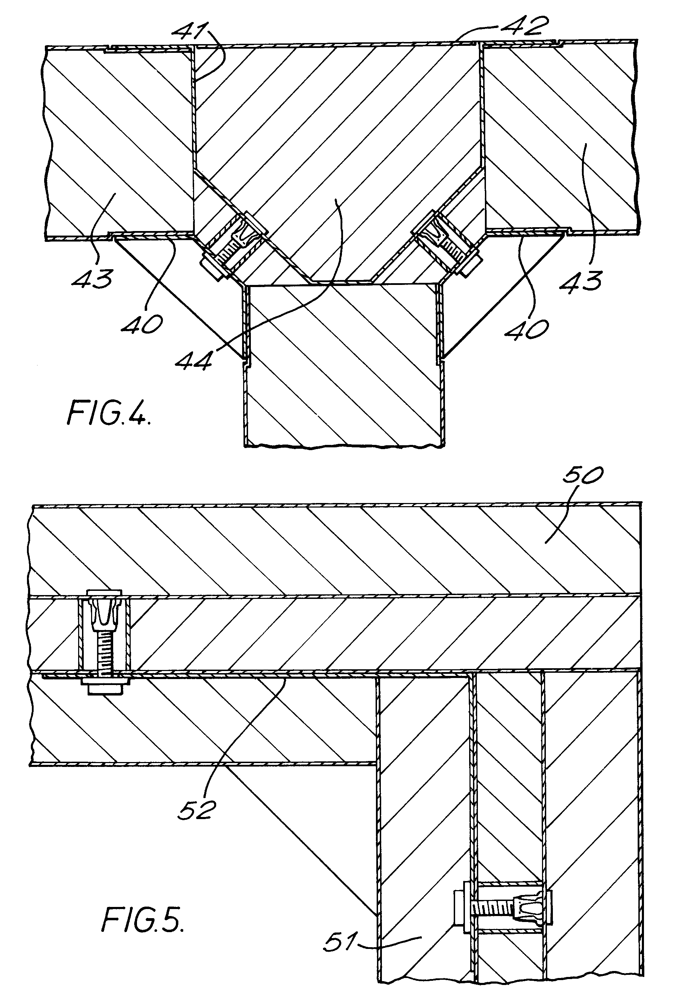

In addition to corners, it is also possible to have dividing walls within the internal space, rigidly connected to the interior walls. An assembly for a partitioning wall is shown in Figure 4, in which the dividing wall is supported by two internal elongate members 40, each cooperating with a divider elongate member 41. In addition, a divider cover plate 42 is applied to cover the external gap between adjacent panels 43 and the space between the adjacent panels 43 is filled with insulating material 44.

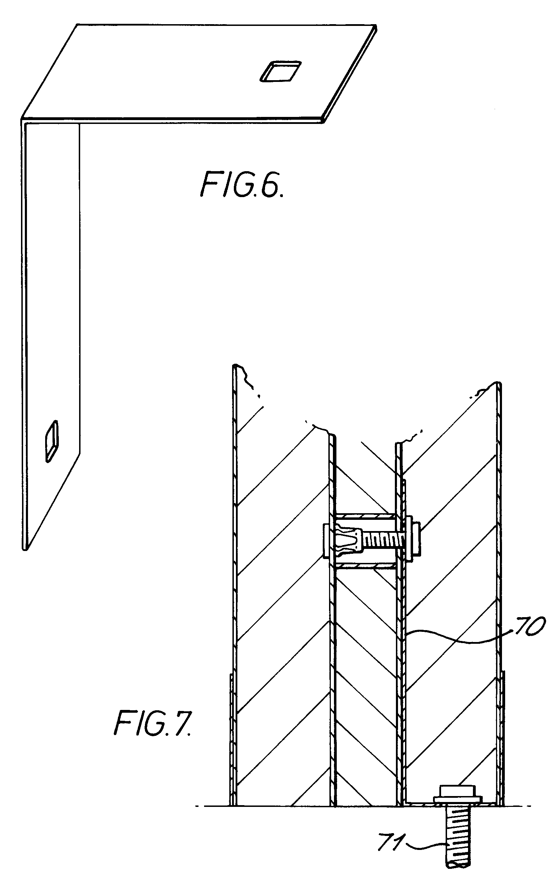

To form a ceiling, specially shaped ceiling panels 50 are formed which cooperate with the top of a vertical panel 51, as shown in Figure 5. The panels are held together by means of a ceiling bracket 52 and said bracket is shown in greater detail in Figure 6. The mechanism for connecting a panel to the floor, essentially consisting of an L-shaped bracket 70 is shown in Figure 7. The bracket is secured to the floor by means of a bolt 71.

Panels forming the ceiling are connected by elongate members similar to those used for connecting vertical panels. The vertical elongate members are secured to the ceiling elongate members to provide a portal frame type structure, significantly adding to the rigidity of the assembly. The present arrangement provides the advantage that damage occurring to one panel does not result in complete collapse of the whole structure, as it is held in place by adjacent, undamaged elongate members. Thus, when subjected to fire, panels are held firmly in place by the expanding metal sheets and even if one or more panels are lost, under intense heat conditions, the frame created by the combination of elongate members remains intact, thereby ensuring that catastrophic collapse of the whole structure does not occur.

## Claims

1. Apparatus for constructing interior walls with easily cleanable surfaces, comprising wall panels (11) and panel connection assemblies (12), wherein the panels are fabricated from heat resistant material (21) sandwiched between surface sheets (22), and the panels have, on side surfaces of oppositely facing longitudinal edges thereof, recesses (28); and the panel connection assemblies each comprise two elongate members (24), which are generally "U"-shaped in transverse cross-section, and which each have a "U"-shaped portion (26) and outwardly extending flange portions (27); means (30) are provided for securing the elongate members together within a space between generally opposing longitudinal edges of adjacent panels with the flange portions (27) of respective elongate members (24) being substantially accommodated within corresponding recesses (28) in said adjacent panels (11), and cover plates (33) accommodated within the recesses (28) to form smooth and easily cleanable surfaces, characterised in that the surface sheets (22) are metal plates (22) and said plates (22) extend throughout the width of the recesses (28) such that ends (29) of the plates (22) contact the walls of the "U"-shaped portions (26) of respective elongate members (24) so that the ends of said metal plates (29), under the influence of heat, apply force to the "U"-shaped portions (26), thereby maintaining the rigidity of the structure.

2. Apparatus as claimed in claim 1, characterised in that the cover plates (33) engage with the elongate members (24) to enclose said members within said space between adjacent panels, such that outwardly facing surfaces of the cover plates lie flush with corresponding surfaces of the panels thereby providing a wall with smooth and easily cleanable flush surfaces.

3. Apparatus as claimed in claim 2, characterised in that the flange portions (27) of the elongate members (24) have end portions (34) with which the cover plates (33) engage to enclose said members (24) within the space between adjacent panels (11).

4. Apparatus as claimed in any preceding claim, characterised in that a filler substance (35) is placed in a gap between the flange portions (27) of the elongate members (24) and end walls of the recesses (28).

5. Apparatus as claimed in any preceding claim, characterised in that insulating material (31) is placed in a space between "U"-shaped portions (26) of elongate members (24) located in the space between adjacent panels (11).

6. Apparatus as claimed in any preceding claim, characterised in that insulating material (32) is positioned in a space between an elongate member (24) and a cover plate (33).

7. Apparatus as claimed in claim 6, characterised in that the insulating material (32) is at least located in the interior space of the "U"-shaped portions (26) of the elongate members (24).

8. Apparatus as claimed in any preceding claim, characterised in that the insulating material (31,32), is fire resistant.

9. Apparatus as claimed in any preceding claim, characterised in that vertical elongate members (24) cooperate with ceiling elongate members supporting ceiling panels (50) to produce portal frame structures.

## Patentansprüche

1. Eine Einrichtung zur Errichtung von Innenwänden mit leicht zu reinigenden Oberflächen, bestehend aus Wandplatten (11) und Plattenverbindungsbausätzen (12), worin die Platten aus einem hitzebeständigen Material (21), das zwischen Oberflächenbleche (22) geschichtet ist, gefertigt wurden, und die Platten an den Seitenoberflächen der gegenüberliegenden Längskanten dieser Aussparungen (28) haben; und die Plattenverbindungsbausätze umfassen je zwei verlängerte Bauglieder (24), die im transversalen Querschnitt allgemein "U"-förmig sind, und die je einen "U"-förmigen Teil (26) und nach außen liegende Flanschteile (27) besitzen; es wird eine Einrichtung (30) vorgesehen, die die verlängerten Bauglieder innerhalb eines Raumes zwischen allgemein gegenüberliegenden Längskanten der angrenzenden Platten befestigt, wobei die Flanschteile (27) der jeweiligen verlängerten Bauglieder (24) im wesentlichen von den entsprechenden Aussparungen (28) in den genannten angrenzenden Wandplatten (11) aufgenommen werden, und die Abdeckplatten (33) von den Aussparungen (28) aufgenommen werden, so daß sie glatte, leicht zu reinigende Oberflächen bilden, dadurch charakterisiert, daß die Oberflächenbleche (22) aus Metallplatten (22) bestehen und die genannten Platten (22) die Wände der "U"-förmigen Teile (26) der jeweiligen verlängerten Bauglieder (24) berühren, so daß die Enden der genannten Metallplatten (29) unter Hitzeeinfluß eine Kraft auf die "U"-förmigen Teile (26) ausüben und damit die Festigkeit der Struktur aufrechterhalten.

2. Eine Einrichtung wie nach Anspruch 1, dadurch charakterisiert, daß die Abdeckplatten (33) mit den verlängerten Baugliedern (24) ineinandergreifen, um die genannten Teile innerhalb des genannten Raumes zwischen angrenzenden Platten einzuschließen, und zwar in einer solchen Weise, daß die nach außen liegenden Oberflächen der Abdeckplatten in einer Ebene mit den jeweiligen Oberflächen der Wandplatten liegen und somit eine Wand mit glatten und leicht zu reinigenden, auf einer Ebene liegenden Oberflächen schaffen.

3. Eine Einrichtung wie nach Anspruch 2, dadurch charakterisiert, daß die Flanschteile (27) der verlängerten Bauglieder (24) Endteile (34) besitzen, mit denen die Abdeckplatten (33) ineinandergreifen, um die genannten Glieder (24) innerhalb des Raumes zwischen den angrenzenden Wandplatten (11) einzuschließen.

4. Eine Einrichtung wie nach einem der vorhergehenden Ansprüche, dadurch charakterisiert, daß eine Füllsubstanz (35) in eine Lücke zwischen den Flanschteilen (27) der verlängerten Bauglieder (24) und die Endwände der Aussparungen (28) eingeführt wird.

5. Eine Einrichtung wie nach einem der vorhergehenden Ansprüche, dadurch charakterisiert, daß Isoliermaterial (31) in einen Raum zwischen den "U"-förmigen Teilen (26) der verlängerten Bauglieder (24) eingeführt wird, welcher sich in dem Raum zwischen den angrenzenden Wandplatten (11) befindet.

6. Eine Einrichtung wie nach einem der vorhergehenden Ansprüche, dadurch charakterisiert, daß das Isoliermaterial (32) in einem Raum zwischen einem verlängerten Bauglied (24) und einer Abdeckplatte (33) angeordnet ist.

7. Eine Einrichtung wie nach Anspruch 6, dadurch charakterisiert, daß das Isoliermaterial (32) sich zumindest in dem inneren Raum der "U"-förmigen Teile (26) der verlängerten Bauglieder (24) befindet.

8. Eine Einrichtung wie nach einem der vorhergehenden Ansprüche, dadurch charakterisiert, daß das Isoliermaterial (31, 32) feuerbeständig ist.

9. Eine Einrichtung wie nach einem der vorhergehenden Ansprüche, dadurch charakterisiert, daß senkrechte verlängerte Bauglieder (24) mit verlängerten Deckenbaugliedern, die Deckenplatten (50) unterstützen, mitwirken, um Portalrahmenstrukturen zu schaffen.

## Revendications

1. Appareil pour construire des murs intérieurs à surfaces facilement nettoyables, comprenant des panneaux pour murs (11) et des montages de reliage de panneaux (12), où les panneaux sont fabriqués de matériau résistant à la chaleur (21) intercalé entre deux feuilles de surface (22), et les panneaux présentent, sur des surfaces latérales de bords longitudinaux l'un en regard de l'autre, des renfoncements (28); et les montages de reliage de panneaux ont chacun deux éléments allongés (24), qui sont généralement formés en "U" en section transversale, et qui ont chacun une partie en "U" (26) et des parties à rebords s'étendant vers l'extérieur (27); des moyens (30) sont pourvus pour solidariser les deux éléments allongés l'un avec l'autre dans un espace entre des bords longitudinaux généralement opposés de panneaux voisins, les parties à rebords (27) des éléments allongés respectifs (24) étant sensiblement logées dans des renfoncements correspondants (28) desdits panneaux voisins (11), ainsi que des plaques supérieures (33) logées dans les renfoncements (28) pour former des surfaces unies et facilement nettoyables, caractérisé en ce que les feuilles de surface (22) sont des plaques en métal (22) et lesdites plaques (22) sont disposées dans toute la largeur des renfoncements (28) de telle manière que les extrémités (29) des plaques (22) sont en contact avec les murs des parties en "U" (26) des éléments allongés respectifs (24) de façon que les extrémités desdites plaques en métal (29), sous l'effet de la chaleur, appliquent une pression sur les parties en "U" (26), maintenant ainsi la rigidité de la structure.

2. Appareil selon la revendication 1, caractérisé en ce que les plaques supérieures (33) s'engagent avec les éléments allongés (24) pour enfermer lesdits éléments dans ledit espace entre les panneaux voisins, de telle manière que les surfaces apparentes des plaques supérieures sont à fleur des surfaces correspondantes des panneaux pour produire un mur à surfaces affleurantes, unies et facilement nettoyables.

3. Appareil selon la revendication 2, caractérisé en ce que les parties à rebords (27) des éléments allongés (24) présentent des parties d'extremité (34) avec lesquels les plaques supérieures s'engagent pour enfermer lesdits éléments allongés (24) dans l'espace entre les panneaux voisins (11).

4. Appareil selon l'une quelconque des revendications précédentes, caractérisé en ce qu'une matière de remplissage (35) est introduite dans un espace entre les parties à rebords (27) des éléments allongés (24) et les murs d'extremité des renfoncements (28).

5. Appareil selon l'une quelconque des revendications précédentes, caractérisé en ce qu'une matière d'isolation (31) est introduite dans un espace entre les parties en "U" (26) des éléments allongés (24) situées dans l'espace entre les panneaux voisins (11).

6. Appareil selon l'une quelconque des revendications précédentes, caractérisé en ce qu'une matiére d'isolation (32) est introduite dans un espace entre un élément allongée (24) et une plaque supérieure (33).

7. Appareil selon la revendication 6, caractérisé en ce que la matière d'isolation (32) se trouve au moins dans l'espace intérieur des parties en "U" (26) des éléments allongés (24).

8. Appareil selon l'une quelconque des revendications précédentes, caractérisé en ce que la matière d'isolation (31, 32) est résistante au feu.

9. Appareil selon l'une quelconque des revendications précédentes, caractérisé en ce que des éléments allongés verticaux (24) agissent en commun avec des éléments allongés de plafond soutenant des panneaux de plafond (50) pour produire des structures de charpente en portique.
